# EUROPÄISCHE PATENTANMELDUNG

(11) **EP 3 409 530 A1**
(43) Veröffentlichungstag der Anmeldung: **05.12.2018**
(21) Anmeldenummer: 18175244.5
(22) Anmeldetag: 30.05.2018
(51) Int. Cl.: B60M 1/225, H01R 43/04, H01R 43/28, B60M 1/28

(54) **MONTAGEVORRICHTUNG SOWIE VERFAHREN ZUR VORMONTAGE VON HÄNGERN FÜR EINE ELEKTRISCHE OBERLEITUNG**

(30) Priorität: 31.05.2017 DE 102017209228
(71) Anmelder: Richard Bergner Elektroarmaturen GmbH & Co. KG, 01445 Radebeul (DE)
(72) Erfinder: MURR, Manfred, 91522 Ansbach (DE); SCHWARZ, Udo, 91560 Heilsbronn (DE); STENGEL, Markus, 90480 Nürnberg (DE)
(74) Vertreter: FDST Patentanwälte

(57) **Zusammenfassung**

Die Montagevorrichtung (2) dient zur teilautomatisierten, einfachen Vormontage von Hängern (8) für eine elektrische Oberleitung, wobei die Hänger zur Befestigung zwischen einem Fahrdraht und einem Tragseil der Oberleitung ausgebildet sind und ein jeweiliger Hänger (8) ein Hängerseil sowie eine erste Kausche (32a) und eine zweite Kausche (32b) aufweist, die unter einem definierten Abstand zueinander am Hängerseil (22) mit Hilfe jeweils einer Klemmhülse (34) am Hängerseil (22) fixiert sind, wobei die Montagevorrichtung (2) aufweist
- ein erstes Fixierelement (44a) zur Fixierung der ersten Kausche (32a),
- eine erste Presseinheit (40a) zur Ausbildung einer Klemmverbindung zwischen dem Hängerseil (22) und der Klemmhülse (34) im Bereich der ersten Kausche (32a),
- vorzugsweise eine erste Klemmeinheit (42a) zum Festklemmen des auf eine gewünschte Länge abgelängten Hängerseils (22) im Bereich des ersten Fixierelements (44a),
- ein zweites Fixierelement (44b) zur Fixierung der zweiten Kausche (32b),
- eine zweite Presseinheit (40b), zur Ausbildung einer Klemmverbindung zwischen dem Hängerseil (22) und der Klemmhülse (34) im Bereich der zweiten Kausche (32b),
- vorzugsweise eine zweite Klemmeinheit (42b) zum Festklemmen des auf die gewünschte Länge abgelängten Hängerseils (22) im Bereich des zweiten Fixierelements (44b), wobei
- das zweite Fixierelement (44b) und die zweite Presseinheit (40b) gemeinsam auf einen verfahrbaren Schlitten (6a) angeordnet sind, der relativ zum ersten Fixierelement (44a) zur Einstellung des definierten Abstands zwischen den beiden Fixierelementen (44a.b) verfahrbar ist, so dass ein auf die gewünschte Länge abgelängtes und mit den Klemmhülsen (34) und den Kauschen (32a, b) versehenes Hängerseil (22) vor der Ausbildung der Klemmverbindung an den Fixierelementen (40a, b) eingehängt werden kann.

## Beschreibung

Die Erfindung betrifft eine Montagevorrichtung sowie ein Verfahren zur Vormontage von Hängern für eine elektrische Oberleitung.

Der Hänger ist ein Bauteil, das dazu dient, eine mechanisch und elektrisch sichere Verbindung zwischen einem Tragseil und einem Fahrdraht einer Oberleitung herzustellen und den Fahrdraht somit auf einer definierten Höhe gegenüber Schienen bzw. gegenüber einer Fahrbahn zu halten.

Das Tragseil übernimmt die Tragwirkung eines sogenannten Längskettenwerks, welches in Fahrtrichtung verläuft. Da das Tragseil nicht beliebig stark gespannt werden kann und aufgrund von Längenänderung durch Temperaturschwankungen, bleibt es nicht aus, dass bei diesem Seil ein Durchhang auftritt. Da aber der Fahrdraht bei einer Oberleitungsbauart immer im konstanten Abstand zu den Schienen bzw. der Fahrbahn hängen muss, ist es nötig, über unterschiedliche Längen von Hängern den Durchhang des Tragseils auszugleichen und einen annähernd horizontalen Verlauf des Fahrdrahtes zu sichern.

Dieser horizontale Verlauf des Fahrdrahtes ist nötig, da der Pantograph (Stromabnehmer) permanent den Fahrdraht überschleift und somit die Energieübertragung von Oberleitung auf das (Schienen-) Fahrzeug realisiert. Dieser Pantograph soll keine allzu großen Höhenunterschiede ausgleichen müssen, da daraus hohe Belastungen resultieren, die zu Schäden führen können.

Der Hänger weist ein Hängerseil auf, welches einerseits über eine Fahrdrahtklemme am Fahrdraht und andererseits über eine Tragseilklemme am Tragseil befestigt wird. Grundsätzlich gibt es zwei verschiedene Varianten von Hängern. Bei einem sogenannten stromfesten Hänger sind zusätzliche Stromschlaufen vorgesehen, die einen sicheren Stromübergang gewährleisten. Endseitig an den Stromschlaufen ist jeweils ein Kabelschuh angeklemmt, der über z.B. eine Schraubverbindung mit der Fahrdrahtklemme bzw. der Tragseilklemme verbunden und elektrisch kontaktiert ist.

Da der Abstand zwischen Fahrdrahtklemme und Tragseilklemme aufgrund des Durchhangs des Tragseils und der gewünschten horizontalen Ausrichtung des Fahrdrahts variiert, ist für jeden Hänger individuell die Länge des Hängerseils vor Ort zu bestimmen und erst dann kann der Hänger individuell gefertigt werden. Die Vormontage des Hängers erfolgt daher vor Ort und mit hohem manuellen Bearbeitungsaufwand. Neben dem damit verbundenen hohen Zeitaufwand bestehen darüber hinaus folgende Fehlerquellen bei der manuallen Vormontage:
- eine Abgangsrichtung der Stromschlaufe (loses Ende) muss auf Ober- und Unterseite des Hängers identisch sein.
- Die bei der Fertigung des Hängers verwendeten Bauteile, wie Kabelschuhe und Klemmhülsen, werden über eine spezielle Crimpverbindung mit zwei Einkerbungen an der einen Seite und nur einer Einkerbung an der anderen Seite des Bauteils am Hängerseil befestigt. Dabei ist darauf zu achten, dass die einfachen Einkerbungen auf der Seite des tragenden Seilstücks des Hängers ist und bei der Stromschlaufe auf der Seite des Seiles.

Aus der DE 40 26 036 C2 ist eine Hängerfertigungsbank zur Konfektionierung derartiger Hänger für Schienenfahrzeug-Oberleitungen zu entnehmen. Auf dieser Hängerfertigungsbank wird dann jeweils eine Schrittabfolge zur individuellen Konfektionierung eines Hängers mit individueller Hängerlänge durchgeführt. Hierbei werden zunächst an einem Ende des Hängerseils die erforderlichen Bauteile, wie beispielsweise ein Kabelschuh, eine Kausche sowie die hierzu erforderlichen Kerb-Pressverbinder (Klemmhülsen) befestigt. Anschließend erfolgt die Ablängung des Hängerseils auf eine gewünschte Länge, bevor nachfolgend in weiteren Schritten an dem gegenüberliegenden Ende des Hängerseils dort die entsprechenden Bauteile, wie Kabelschuh, Kausche sowie die Kerb-Pressverbinder befestigt werden. Die Befestigung der einzelnen Bauteile erfolgt hierbei handbetätigt mittels einer Handpresszange.

Zur Reduzierung des manuellen Bearbeitungsaufwands sind weiterhin Vorrichtungen bekannt, bei denen die Konfektionierung von Hängern zumindest teil-automatisiert erfolgt. So wird beispielsweise in der CN 105 41 4414 B eine vollautomatisierte Vorrichtung zur Konfektionierung von Hängern beschrieben. Auch aus der CN 104 354 0606 B oder der CN 104 002 700 B sind Vorrichtungen zur automatisierten Konfektionierung von Hängern zu entnehmen. Diese Vorrichtungen weisen in der Regel verfahrbare Schlitten auf, um die gewünschte Länge einstellen zu können. Das Verpressen erfolgt automatisiert durch geeignete Pressen. Bei diesen automatisierten Vorrichtungen wird typischerweise ebenfalls sukzessive vorgegangen und es werden zunächst die Bauteile an dem einen Seilende angebracht und nachfolgend nach einem Ablängen werden die Bauteile an dem zweiten Seilende befestigt.

Ausgehend hiervon liegt der Erfindung die Aufgabe zu Grunde, die Vormontage eines solchen Hängers zu vereinfachen.

Die Aufgabe wird erfindungsgemäß gelöst durch eine Montagevorrichtung mit den Merkmalen des Anspruchs 1 sowie durch ein Verfahren mit den Merkmalen des Anspruchs 13.

Bevorzugte Weiterbildungen sind in den Unteransprüchen enthalten. Die im Hinblick auf die Montagevorrichtung angeführten Vorteile und bevorzugten Ausgestaltungen lassen sich sinngemäß auch auf das Verfahren übertragen.

Die Montagevorrichtung dient zur zumindest teilautomatisierten Vormontage von Hängern für eine elektrische Oberleitung beispielsweise für den Schienenverkehr.

Die Montagevorrichtung weist einen verstellbaren Schlitten auf, mit dem zwei Montageeinheiten oder Montageblöcke gegeneinander verschiebbar sind. Eine jede dieser Montageeinheiten weist dabei eine Presseinheit sowie ein Fixierelement zum Fixieren der beiden Kauschen des Hängers auf. Mittels der Presseinheiten, die speziell als hydraulische Pressen ausgebildet sind, erfolgt das Verpressen von Klemmhülsen im Bereich der jeweiligen Kausche, um das Hängerseil zu fixieren und zu klemmen und damit eine definierte Länge des Hängerseils und damit den definierten Abstand zwischen Tragseil und Fahrdraht einzustellen. Die Fixierelemente sind dabei beispielsweise als einfache Stifte oder Bolzen ausgebildet, auf die eine jeweilige Kausche aufgelegt wird. Durch Verfahren des Schlittens werden die beiden Kauschen in einen definierten Abstand zueinander gebracht. Das Einfädeln des Seils um die Kauschen bzw. durch die Klemmhülsen hindurch erfolgt durch den Monteur, kann jedoch auch automatisiert erfolgen. Durch die Verfahrbarkeit des Schlittens lässt sich für jeden Hänger individuell und hochgenau die gewünschte Hängerlänge einstellen, die zuvor beispielsweise durch einen Messvorgang an der Oberleitung direkt ermittelt wurde. Die Hängerlänge entspricht dabei dem Abstand zwischen dem Fahrdraht und dem Tragseil.

Ergänzend ist vorzugsweise jeder der Montageeinheiten jeweils eine Klemmeinheit zugeordnet, die zum Festklemmen des auf die gewünschte Länge abgelängten Hängerseils im Bereich der Fixierelemente ausgebildet sind.

Durch die beiden Montageeinheiten und den doppelt ausgeführten Bauteilen, nämlich Presseinheit, Fixierelement und vorzugsweise Klemmeinheit wird dadurch die Möglichkeit geschaffen, dass bei der Montage ein vorbereitetes, bereits auf die gewünschte Länge abgelängtes sowie mit den Klemmhülsen und den Kauschen versehenes Hängerseil in die in die Fixierelemente der beiden Montageeinheiten eingelegt wird und auf die benötigte Hängerlänge voreingestellt wird, bevor dann die Klemmverbindungen an den Klemmhülsen ausgebildet werden.

Durch die Klemmeinheiten wird dabei vor dem Verklemmen der Klemmhülsen das Hängerseil und damit die Hängerlänge zuverlässig vorfixiert, bevor die Klemmung erfolgt.

Bei den Presseinheiten handelt es sich bevorzugt um automatische, nicht händisch zu betätigende Presswerkzeuge. Diese sind insbesondere als Hydraulik-Pressköpfe ausgebildet. Alternativ können die Presseinheiten auch elektrisch oder pneumatisch angesteuert werden. Mithilfe der Montagevorrichtung werden daher zunächst die einzelnen Komponenten des Hängers in die korrekte Relativlage zueinander gebracht, indem die Kauschen an den Fixierelementen fixiert werden und die korrekte Länge eingestellt wird. Anschließend erfolgt die Verpressung vorzugsweise automatisch.

Hierdurch ergeben sich insbesondere folgende Vorteile:
- Arbeitserleichterung, da kein manueller Pressvorgang erforderlich ist,
- Erzeugen von reproduzierbaren Ergebnissen, da durch die maschinelle/automatisierte Ausbildung der Pressverbindung die Klemmhülsen mit definierter Presskraft und an der korrekten Position verpresst werden,
- Steigerung der Effizienz bei der Vormontage,
- Verminderung oder gar Beseitigung von Fehlern bei der Vormontage, da mit Hilfe der Montagevorrichtung zunächst die genaue Ausrichtung der einzelnen Komponenten erfolgt und damit Fehlorientierungen beispielsweise der Klemmhülsen vermieden sind,
- Reduktion des Personaleinsatzes, da die Vorrichtung von nur einer Person bedienbar ist (bisher waren typischerweise 2 Personen bei der manuellen Herstellung erforderlich).

Bei einer vereinfachten Ausführungsvariante sind die Presseinheiten nicht unmittelbar auf den Montageeinheiten angeordnet, sondern es ist zumindest eine händisch zu bedienende Presseinheit an der Montagevorrichtung bereitgestellt. Hierbei handelt es sich insbesondere um ein elektrisch betriebenes Presswerkzeug.

Dieses ist vorzugsweise oberhalb der Montageeinheiten angeordnet, beispielsweise aufgehängt, insbesondere über einen Federzug.

Vorzugsweise ist die Montagevorrichtung zur Herstellung bzw. zur Vormontage eines stromfesten Hängers ausgebildet. Bei diesem werden Endbereiche des Hängerseils jeweils als Stromschlaufen über die Klemmelemente hinausgeführt.

Die Montagevorrichtung weist entsprechend für die Befestigung von Kabelschuhen am jeweiligen Ende des Hängerseils zur Ausbildung der Stromschlaufen jeweils eine weitere Presseinheit auf. Diese ist dabei vorzugsweise jeweils winklig, insbesondere etwa rechtwinklig zu der Presseinheit für die Befestigung der Klemmhülse im Bereich der Kausche orientiert. Unter winkliger Orientierung wird dabei verstanden, dass die Pressrichtungen der Presseinheiten winklig zueinander orientiert sind. Die Pressrichtung ist definiert durch die Richtung, in der Pressbacken aufeinander zu bewegt werden.

In bevorzugter Ausgestaltung ist jeder der insgesamt vier Presseinheiten jeweils eine Klemmeinheit zur Fixierung des Hängerseils zugeordnet. Die Klemmeinheit klemmt das Hängerseil allgemein im Bereich der jeweiligen Presseinheit. Hierdurch wird sichergestellt, dass beim automatischen Klemmvorgang das Seil nicht verrutscht. Zweckdienlicherweise weist die jeweilige Klemmeinheit ein Gegenlager sowie einen Klemmhebel auf, wobei das Seil zwischen Gegenlager und Klemmhebel einklemmbar ist. Bei den Klemmeinheiten handelt es sich beispielsweise um händisch betätigbare Klemmeinheiten, vorzugsweise jedoch auch um automatische Klemmeinheiten, bei denen die Klemmung nicht mit Muskelkraft erfolgt.

Zur teil- oder vollautomatisierten Verfahrensführung bei der Vormontage umfasst die Montagevorrichtung insbesondere eine Steuereinheit.

In bevorzugter Ausgestaltung ist der Schlitten mit Hilfe eines motorischen Antriebs verfahrbar, insbesondere wird der Schlitten automatisch mit Hilfe der Steuereinheit an eine gewünschte Längenposition verfahren, sodass der gewünschte definierte Abstand (also die Hängerlänge) vorzugsweise automatisch über die Steuereinheit und den motorischen Antrieb eingestellt wird.

Hierdurch ist insgesamt eine automatisierte Einstellung der Länge sowie Klemmung ermöglicht, sodass eine hochgenaue Ausbildung des Hängers mit dem gewünschten Abstand zwischen den beiden Kauschen erreicht wird.

Innerhalb eines Feldes einer Oberleitung, also zwischen zwei Abspannmasten, kann der Abstand zwischen Drahtseil und Fahrdraht um beispielsweise ca. 1 m variieren. Eine typische Länge eines Feldes (Abstand zwischen zwei Abstandsmasten) liegt dabei zwischen 60 m und 80 m. Innerhalb dieses Feldes werden beispielsweise ca. 10 Hänger angeordnet, sodass diese also in einem Abstand von beispielsweise 5 m bis 10 m angeordnet werden.

Der Hänger muss hochgenau individuell, für die jeweilige Position, wo der Hänger montiert werden soll, auf die gewünschte Länge eingestellt sein.

Die Länge der Stromschlaufen ist dem gegenüber weniger relevant und kann größere Toleranzen aufweisen.

In bevorzugter Ausgestaltung weist die Montagevorrichtung eine Schneideinrichtung zum Ablängen des Seils auf eine erforderliche Länge auf. Das Ablängen erfolgt dabei insbesondere automatisch in Abhängigkeit der Eingabe des gewünschten Abstands. Zweckdienlicherweise ist dabei eine Seiltrommel an der Montagevorrichtung angeordnet, von der das Seil abrollbar ist.

Insbesondere weist die Montagevorrichtung allgemein eine Montageebene bzw. Montagetisch auf, auf dem die Presseinheiten sowie insbesondere der verfahrbare Schlitten angeordnet sind. Die Seiltrommel sowie sie Schneideinrichtungen sind vorzugsweise unterhalb des Montagetisches / der Montageebene angeordnet. Das auf die gewünschte Länge abgeschnittene Seil wird vom Monteur anschließend aufgenommen, mit den erforderlichen Elementen (Klemmhülsen, Kauschen sowie gegebenenfalls Kabelschuhe für die Stromschlaufen) versehen, die Kauschen werden an den Fixierelementen (Fixierstifte) eingehängt, anschließend werden diese Fixierelemente an die gewünschte definierte Länge mithilfe des verfahrbaren Schlittens verfahren, schließlich werden die Seilabschnitte an den Positionen mittels der Klemmeinheiten fixiert, bevor dann das Klemmen der zwei Klemmhülsen (sowie bei der Ausbildung als ein stromfester Hänger auch das Klemmen der Kabelschuhe für die Stromschlaufen) erfolgt.

Zweckdienlicherweise ist ergänzend auch eine Markierungseinheit zum insbesondere automatischen Beschriften eines jeweiligen Hängers ausgebildet. Hierbei handelt es sich insbesondere um eine Nadeleinheit, die die Beschriftung in Bauteilen des Hängers einprägt, beispielsweise auf einer der Klemmhülsen oder auch auf einen separaten Beschriftungsanhänger, beispielsweise eine Blechlasche. Hierbei können Informationen, speziell zur eingestellten Hängerlänge aber auch weitergehende Informationen, beispielsweise über Hängertyp, Materialwahl, Monteur, Zeitpunkt der Montage, sowie Informationen zur Verpressung, wie Presskräfte etc. verwendet werden.

Die Presskräfte werden vorzugsweise im Zuge einer Prozesskontrolle erfasst. Hierzu sind die Presseinheiten geeignet ausgebildet. Insbesondere erfolgt insgesamt eine Protokollierung der Vormontage der Hänger mit den oben angeführten Daten, die z.B. in einem Speicher beispielsweise der Steuereinheit abgelegt werden.

Die hier beschriebene Vorrichtung dient sowohl für die Erstmontage von Hängern an Oberleitungen als auch für einen späteren Austausch von verbrauchten Hängern. Speziell im zweitgenannten Fall kann die eingeprägte Hängerlänge für den Ersatzhänger übernommen werden.

Die gesamte Montagevorrichtung benötigt zweckdienlicherweise lediglich einen Stromanschluss, um die einzelnen Einheiten betreiben zu können. Da vorzugsweise für die Presseinheiten Hydraulikpressen verwendet werden, umfasst die Montagevorrichtung zweckdienlicherweise noch ein Hydraulikaggregat zur Erzeugung des erforderlichen Hydraulikdrucks. Dieses Hydraulikaggregat wird dabei mit dem Stromanschluss von beispielsweise 230 V betrieben.

Alternativ weist die Montagevorrichtung weitere Anschlüsse, z.B. pneumatik- oder Hydraulikanschlüsse zur Verbindung mit einer entsprechenden Versorgung auf.

In bevorzugter Weiterbildung erfolgt eine automatische Übermittlung des gewünschten Abstands und damit einer gewünschten Hängerlänge an die Steuereinheit. Hierzu steht die Steuereinheit in einer beispielsweise drahtlosen Kommunikationsverbindung mit einer Messeinrichtung.

Die Messeinrichtung dient dabei insbesondere zur automatischen Erfassung des Abstands. Beispielsweise ist sie ein kamerabasiertes System, welches den Abstand zwischen Tragseil und Fahrdraht automatisch erfasst. Bei der Messeinrichtung kann es sich aber auch um eine Lasermesseinrichtung handeln, mittels der der Abstand automatisch erfasst wird. Die Messeinrichtung kann dabei auch ein halbautomatisches Messgerät sein, beispielsweise ein herkömmlicher Laserabstandsmesser, der von dem Monteur jeweils manuell an die gewünschte Montageposition am Tragseil, bzw. Fahrdraht zu halten ist und über die der Abstand gemessen wird. In allen Fällen wird das Messergebnis insbesondere drahtlos an die Steuereinheit übermittelt.

Die gesamte Montagevorrichtung ist zweckdienlicherweise zur Anordnung auf einem Hubwagen ausgebildet.

Insbesondere weist die gesamte Montagevorrichtung ein Gewicht von maximal 300 kg und insbesondere von max. 200 kg auf. Insgesamt ist die Montagevorrichtung daher mobil und ist entlang der Oberleitung beispielsweise mit Hilfe des Hubwagens verfahrbar. Alternativ wird sie auf einem Fahrzeug am Boden/auf den Schienen positioniert und die vorbereiteten Hänger werden einem zweiten Monteur nach oben übergeben.

Vorzugsweise weist die Vorrichtung weiterhin eine Konfektionierungshilfe auf. Hierzu ist auf dem Schlitten sowie auf der Montageeinheit, auf der das erste Fixierelement und die erste Presseinheit angeordnet sind, jeweils ein Hilfs-Fixierelement angeordnet, welches vorzugsweise - wie das erste oder zweite Fixierelement - nach Art eines Bolzens ausgebildet ist. Die Hilfs-Fixierelemente dienen zur Aufnahme jeweils einer Kausche bzw. zumindest zum Herumführen des Hängerseils an dem für die jeweilige Kausche vorgesehenen Ort. Sie sind auf der jeweiligen Montageeinheit dabei neben der jeweiligen Presseinheit in einem frei zugänglichen Bereich angeordnet. Sie weisen dabei zueinander vorzugsweise den gleichen Abstand wie die normalen Fixierelemente auf.

Bei der Vormontage wird vorzugsweise derart vorgegangen, dass vorzugsweise ein Ende des Hängerseils an einen Anschlag geschoben wird und mit einem Klemmhebel fixiert wird. Das Hängerseil wird mit den Klemmhülsen bestückt und um das erste Hilfs-Fixierelement geführt. Die Kausche kann (nicht zwingend) zuvor auf das erste Hilfs-Fixierelement aufgelegt werden, so dass das Hängerseil bereits auch um die Kausche geführt wird. Der Abstand von dem Anschlag bis zum ersten Hilfs-Fixierelement ist dabei derart gewählt, dass die gewünschte Länge für die Stromschlaufe vorgegeben ist.

Schlittenseitig wird die zweite Kausche auf dem zweiten Hilfs-Fixierelement aufgelegt und das Hängerseil wird um die Kausche geführt. Die zuvor aufgefädelte Klemmhülse wird an die Kausche geschoben. Vorzugsweise wird der so vorbereitete Hänger (Hängerseilanordnung) von dem zweiten Hilfs-Fixierelement angehoben und das Endstück des Hängerseils wird durch ein insbesondere U-förmiges Ziehstück geführt.. Das U-Förmige Ziehstück dient dazu, die Klemmhülse (Pressverbinder) straff an die Kausche zu drücken. Hierzu wird an dem Endstück des Hängerseils gezogen, so dass die Klemmhülse gegen das Ziehstück anschlägt und entlang des Hängerseils in Richtung zur ersten Kausche verschoben wird. So wird verhindert, dass das Hängerseil verschiebt oder verrutscht (relativ zu den Klemmhülsen), wenn nachfolgend der so vorbereitete Hänger (Hängerseilanordnung) in die Verpressposition, also an den normalen Fixierelementen eingelegt wird. , .

Bevorzugt werden bei der Vor-Konfektionierung bereits auch die Kabelschuhe endseitig vormontiert. Da die Hilfs-Fixierelemente neben den Presseinheiten und auch neben den Klemmeinheiten und damit frei zugänglich auf den Montageeinheiten angeordnet sind, stören diese Press- und Klemmeinheiten beim Einfädeln des Hängerseils nicht. Gleichzeitig wird der gewünschte Abstand zwischen den Kauschen bzw. die gewünschte Hängerlänge bereits bei der Vor-Konfektionierung eingestellt.

Nach der Vorkonfektionierung wird das so vorbereitete und mit den Armaturen (Kauschen, Klemmhülsen, Kabelschuhe) versehene Hängerseil anschließend insbesondere manuell von den Hilfs-Fixierelementen abgenommen und an den eigentlichen Fixierelementen mit den Kauschen fixiert. Danach erfolgt das Verpressen der Armaturen wie zuvor beschrieben.

Insgesamt umfasst die Konfektionierungshilfe die Hilfs-Fixierelemente und vorzugsweise weiterhin den Anschlag, den Klemmhebel sowie weiter vorzugsweise das Ziehstück.

Ein Ausführungsbeispiel wird nach der Erfindung wird nachfolgend anhand der Figuren näher erläutert. Diese zeigen
- Fig. 1: eine perspektivische Darstellung einer Montagevorrichtung zur Vormontage von Hängern,
- Fig. 2: eine perspektivische Darstellung eines vorkonfektionierten stromfesten Hängers,
- Fig. 3: eine perspektivische, ausschnittsweise Darstellung von Teilen der Montagevorrichtung sowie
- Fig. 4: eine vergrößerte ausschnittsweise Darstellung aus der Fig. 3, die einen verfahrbaren Schlitten zeigt.

In den Figuren sind gleiche Bauteile jeweils mit den gleichen Bezugszeichen versehen.

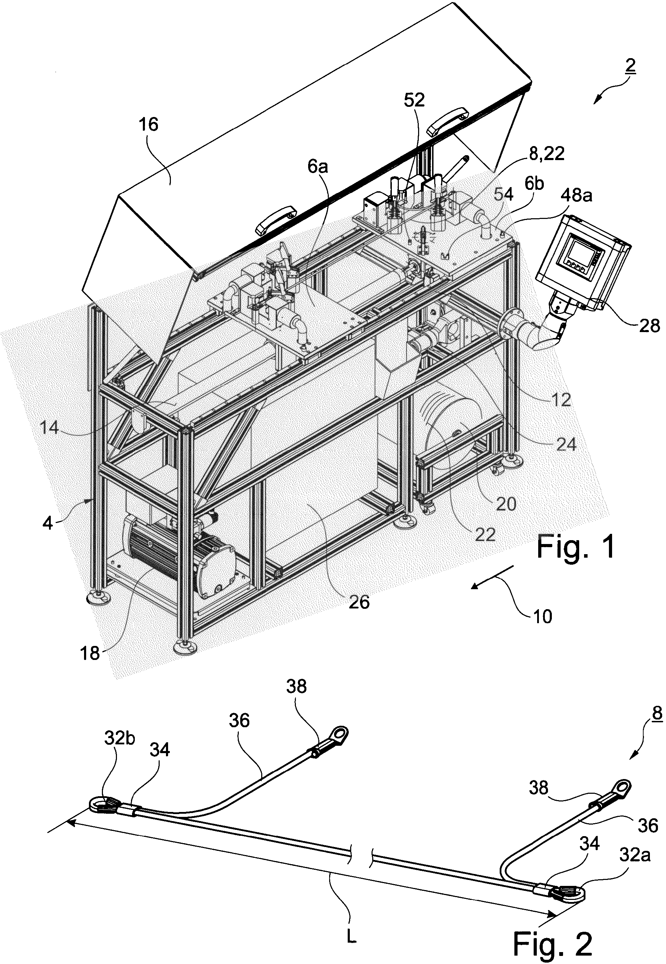

Die in der Fig. 1 dargestellte Montagevorrichtung 2 weist ein im Ausführungsbeispiel ein aus einzelnen Profilelementen gebildetes Traggerüst 4 mit Quer- und Längsstreben auf. Dieses Traggerüst 4 bildet quasi einen Montagetisch aus und definiert eine obere Montageebene, auf der zwei relativ zueinander verschiebbare Plattformen oder Montageeinheiten 6a,6b angeordnet sind. Jede dieser Montageeinheit 6a,6b weist jeweils eine Montageplatte auf, auf der jeweils mehrere Komponenten für die Vormontage eines Hängers 8 angeordnet sind.

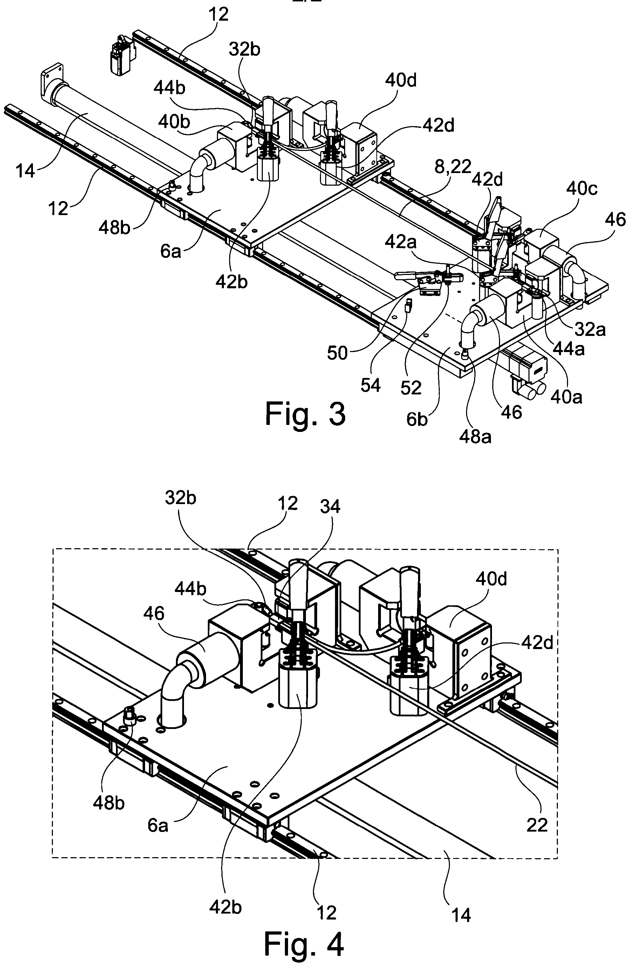

Im Ausführungsbeispiel ist die eine Montageeinheit als ein motorisch, insbesondere elektromotorisch verschiebbarer Schlitten 6a ausgebildet. Die zweite Montageeinheit 6b ist demgegenüber feststehend auf dem Traggerüst 4 montiert. Der Schlitten 6a ist in einer Längsrichtung 10 entlang von Führungsschienen 12 (vgl. hierzu beispielsweise Fig. 3) verfahrbar. Der motorische Antrieb umfasst beispielsweise einen Spindelantrieb 14.

Die Montagevorrichtung 2 weist im Ausführungsbeispiel weiterhin eine Schutzhaube 16 auf, sodass während eines Pressvorgangs ein zuverlässiger Berührungsschutz gegeben ist. Das heißt ein Verpressen kann nur bei geschlossener Schutzhaube 16 erfolgen.

Im Bereich unterhalb der Montageebene sind weitere Komponenten der Montagevorrichtung 2 untergebracht. Dies ist beispielsweise ein Hydraulikaggregat 18 zum Erzeugen eines Hydraulikdrucks für einen hydraulischen Pressvorgang. Weiterhin ist eine Seiltrommel 20 angeordnet, von der ein Hängerseil 22 als Meterware abrollbar ist. Die Seiltrommel 20 ist bevorzugt in einem über Rollen verfahrbaren Fahrwagen gehalten.

Weiterhin ist insbesondere oberhalb der Seiltrommel 20 und unterhalb der Montageeinheiten 6a,6b eine Schneideinrichtung 24 angeordnet, die zum Abtrennen des Hängerseils 22 auf eine gewünschte Länge ausgebildet ist. Die Schneideinrichtung 24 umfasst hierbei in nicht näher dargestellter Weise eine Messeinrichtung, bei Bedarf Zufuhr- und/oder Umlenkrollen sowie ein Schneidelement. Die Schneideinrichtung 24 dient insbesondere zum automatischen Ablängen des Hängerseils 22 auf die gewünschte Länge. Über eine geeignete Messeinrichtung wird die erforderliche Länge automatisch eingestellt und abgeschnitten. Die erforderliche Länge ergibt sich dabei aus der individuellen Hängerlänge L zuzüglich weiterer Seilabschnitte, die z.B. zum Befestigen in den Klemmhülsen und - bei der Variante der stromfesten Hänger 8 - für die Stromschlaufen erforderlich sind. Die individuelle Hängerlänge L ergibt sich aus dem Abstand zwischen Tragseil und Fahrdraht an der für den Hänger 8 vorgesehenen Position in der Oberleitung.

Das abgelängte Hängerseil 22 wird nach dem Ablängen auf einer Ablage abgelegt, beispielsweise in ein unterhalb der Schneideinrichtung 24 angeordnetes Ablagefach, in das das Hängerseil 22 automatisch nach dem Abtrennen fallen kann.

Weiterhin umfasst die Montagevorrichtung 2 eine beispielsweise als Schaltschrank ausgebildete Steuereinheit 26 sowie eine Bedien- und Eingabeeinheit 28. Diese ist im Ausführungsbeispiel als ein Bedienpaneel ausgebildet, welches beispielsweise als Touch-Paneel ausgebildet ist. Es ist beispielsweise seitlich auskragend an einem Haltearm angeordnet. Weiterhin weist die Montagevorrichtung 2 mehrere Vorratsbehälter 30 auf für Verbrauchsmaterial bei der Vormontage der Hänger 8.

Ein zu montierender Hänger 8 ist in der Fig. 2 in der Ausführungsvariante als stromfester Hänger 8 dargestellt. Dieser weist allgemein das bereits erwähnte Hängerseil 22 mit definierter Länge auf. Das Hängerseil 22 wird an gegenüberliegenden Stellen jeweils um eine erste Kausche 32a sowie um eine zweite Kausche 32b geführt. Unmittelbar angrenzend zur jeweiligen Kausche 32a, b ist jeweils eine Klemmhülse 34 angeordnet, durch die das Hängerseil 22 zweifach geführt ist. Die beiden Seilstücke sind dabei nebeneinander angeordnet. Ein jeweils aus der Klemmhülse 34 wieder austretender Endabschnitt bildet eine sogenannte Stromschlaufe 36 aus. Endseitig am Hängerseil 22 und damit am Ende der Stromschlaufe 36 ist im Ausführungsbeispiel ein Kabelschuh 38 befestigt. Dieser umfasst einen hülsenförmigen Klemmabschnitt, durch den - wie bei der Klemmhülse 34 auch - das Hängerseil zweifach hindurchgeführt wird, so dass zwei Teilabschnitte des Hängerseils 22 nebeneinander angeordnet sind. Der Kabelschuh 38 weist neben dem hülsenförmigen Abschnitt zum Festklemmen des Hängerseils 22 ein insbesondere ringförmiges Anschlussstück zur Schraubfixierung des Kabelschuhs auf.

Die individuelle und möglichst genau einzustellende Hängerlänge L ist definiert durch den Abstand zwischen den zwei Kauschen 32a, b.

Die beiden Kabelschuhe 38 sowie die Klemmhülsen 34 werden jeweils durch eine Pressverbindung klemmend am Hängerseil 22 fixiert. Dabei wird insbesondere eine sogenannte Kerb-Pressverbindung ausgebildet. Hierzu werden üblicherweise auf der einen Seite zwei Kerben und auf der gegenüberliegenden Seite mittig eine Kerbe eingepresst. Bei den Einkerbungen ist dabei darauf zu achten, dass die einfachen Einkerbungen auf der Seite des tragenden Seilstücks des Hängers 8 angeordnet sind. Dies ist die dem Betrachter der Fig. 2 zugewandte Seite der Klemmhülsen 34. Gleichzeitig sind die einfachen Einkerbungen bei den Kabelschuhen 38 auf der Seite des Hängerseils 22 angebracht, also auf der Seite des von der Klemmhülse 34 kommenden Seilstücks. Bei dem Kabelschuh 38 auf der rechten Bildhälfte der Fig. 2 ist dies die rechte Seite. Bei dem Kabelschuh 38 auf der linken Bildhälfte ist dies die linke Seite. Weiterhin ist zu beachten, dass die beiden Stromschlaufen 36 zur gleichen Seite hin abgehen, d.h. sie weisen die gleiche Abgangsrichtung auf.

Bei der Montage eines solchen vorkonfektionierten Hängers an einer Oberleitung wird der Hänger 8 über die Kauschen 32a, 32b in eine Fahrdrahtklemme bzw. eine Tragseilklemme eingehängt. Der jeweilige Kabelschuh 38 wird ergänzend über eine Schraubverbindung mit der Fahrdrahtklemme bzw. der Tragseilklemme zur elektrischen Kontaktierung verbunden.

Wie eingangs erläutert ist für eine möglichst horizontale Ausrichtung des Fahrdrahts bei gleichzeitig durchhängendem Tragseil es erforderlich, dass die Hängerlänge L, also der Abstand zwischen den beiden Kauschen 32a, 32b für jeden Hänger 8 in Abhängigkeit eines jeweiligen Abstands zwischen Hängerseil und Fahrdraht eingestellt wird. Entsprechend erfolgt die Vormontage eines derartigen Hängers 8 auch unmittelbar vor Ort, da typischerweise für einen jeweiligen Hänger 8 an der für ihn vorgesehenen Position zunächst der Abstand zwischen Fahrdraht und Trägerseil ausgemessen und erst anschließend der Hänger 8 vormontiert wird, bevor dann seine eigentliche Montage an der Oberleitung erfolgt. Dies erforderte bisher einen erheblichen manuellen Aufwand. Eine fernab der Oberleitung erfolgende standardisierte Herstellung ist allgemein schwierig oder nicht möglich, da die genauen Abstände nicht bekannt sind. Entsprechend wird die hier beschriebene Montagevorrichtung 2 auch als eine mobile Montagevorrichtung 2 ausgebildet, die also unmittelbar mit an die Baustelle, also an die Oberleitung gebracht wird. Speziell wird sie beispielsweise innerhalb eines Hubwagens zusammen mit Monteuren angehoben, die dann vor Ort unmittelbar den Abstand ausmessen und den Hänger 8 vormontieren.

Die Vormontage des Hängers 8 wird nachfolgend insbesondere im Zusammenhang mit den Figuren 2 und 3 näher erläutert:
Auf den beiden Montageeinheiten 6a, 6b sind eine erste bis vierte Presseinheit 40a bis 40d, eine erste bis vierte Klemmeinheit 42a bis 42d sowie ein erstes bis viertes Fixierelement 44a bis 44d angeordnet. Bei den Presseinheiten 40a bis 40d handelt es sich insbesondere um hydraulische Presseinheiten, die jeweils Klemmbacken aufweisen und zur Ausbildung der Kerb-Pressverbindungen an den Klemmhülsen 34 bzw. den Kabelschuhen 38 ausgebildet sind. Jeder Presseinheit 40a bis 40d ist dabei eine Klemmeinheit 42a bis 42d zugeordnet. Bei diesen handelt es sich um mittels eines manuell betätigbaren Hebens bedienbare Klemmen, die zum Einklemmen und Fixieren des Hängerseils 22 ausgebildet sind. Das Hängerseil 22 wird dabei bei Betätigen des Hebels zwischen einem Klemmbacken und einem Widerlager eingeklemmt, so dass es zuverlässig ortsfixiert ist.

Weiterhin ist ein jeder Presseinheit ein Fixierelement 44a bis 44d zugeordnet, welches vorliegend im einfachsten Fall als Fixierbolzen ausgebildet ist. Die Kauschen 32a, 32b sowie die Kabelschuhe 38 werden auf diese Fixierbolzen aufgesetzt und dadurch in ihrer Position fixiert.

Wie insbesondere aus der Figur 2 zu entnehmen ist, ist auf der feststehenden Montageeinheit 6b die erste und dritte Presseinheit 40a, 40c sowie die erste und dritte Klemmeinheit 42a, 42c angeordnet. Ergänzend sind das erste und das dritte Fixierelement 44a, 44c darauf angeordnet.

Auf dem verfahrbaren Schlitten 6a sind dem gegenüber die zweite und vierte Presseinheit 40b, 40d, die zweite und vierte Klemmeinheit 42b, 42d sowie das zweite und vierte Fixierelement 44b, 44d angeordnet (einige dieser Elemente sind in den Figuren 2, 3 nicht mit den Bezugszeichen versehen, da sie verdeckt dargestellt sind). Bei den Presseinheiten 40a bis 40d handelt es sich um hydraulische Presseinheiten, welche über einen Hydraulikanschluss 46 mit dem Hydraulikaggregat 18 verbunden sind. Die Presseinheiten 40a bis 40d einer jeweiligen Montageeinheit 6a, 6b sind winklig zueinander angeordnet, insbesondere in einem 90°C-Winkel. Vor einer jeweiligen Presseinheit 40a bis 40d, also auf einer einem jeweiligen Fixierelement 44a bis 44d gegenüberliegenden Seite der Presseinheit 40a bis 40d ist jeweils die Klemmeinheit 42a bis 42d angeordnet.

In den Figuren ist noch eine Konfektionierungshilfe zur Vorkonfektionierung des Hängers 8 dargestellt. Und zwar sind auf dem Schlitten 6a sowie auf der weiteren Montageeinheit 6b Hilfs-Fixierelemente 48a, b angeordnet. Diese sind ebenfalls wie die Fixierelemente 44a,b als Bolzen ausgebildet, auf die die Kauschen 32a,32b aufgesteckt werden können bzw. um die das Hängerseil 22 geführt werden kann. Die Hilfs-Fixierelemente 48a, b sind dabei auf gleicher Höhe (in Längsrichtung 10 betrachtet) wie die eigentlichen Fixierelemente 44a, 44b angebracht, weisen also den gleichen Abstand wie diese zueinander auf. Die Hilfs-Fixierelemente 48a, b sind dabei insbesondere in einem Randbereich und damit in einem frei zugänglichen Bereich der Montageplatte der jeweiligen Montageeinheit 6a, 6b neben den Presseinheiten 40a-d sowie auch neben den Klemmeinheiten 42a-d angeordnet. Weiterhin weist die Konfektionierungshilfe einen Klemmhebel 50 sowie einen Anschlag 52 auf. Ergänzend ist weiterhin ein Ziehstück 54 vorgesehen. Bei dem Anschlag 52 handelt es sich beispielsweise um einen einfachen Block. Bei der Montage wird ein Ende des Hängerseils 22 gegen den Anschlag 52 angelegt. Mit Hilfe des Fixierhebels 50 wird das Hängerseil 22 im Bereich des Anschlags 52 fixiert. Das Ziehstück ist vorzugsweise als ein U-förmiges Element ausgebildet, welches auf der Montageeinheit 6b fixiert ist. Das Hängerseil 22 kann von oben in die U-förmige Aufnahme eingeführt werden.

Die Konfektionierungshilfe dient allgemein zum Vorkonfektionieren des Hängers 8 mit den Klemmhülsen 34, bevor der dann vorbereitete Hänger 8 an den eigentlichen Fixierelementen 44a-d fixiert wird.

Bei diesem Vorkonfektionieren wird zuerst wird ein Ende des Hängerseils 22 an den Anschlag 52 gelegt und dann mittels des Klemmhebels 50 fixiert. Das freie Ende des Hängerseils 22 wird um das erste Hilfs-Fixierelement 48a geführt und mit Klemmhülsen 34 bestückt. Das zweite Hilfs-Fixierelement 48b wird mit der zweiten Kausche 32b bestückt. Das Hängerseil 22 wird dann um die zweite Kausche 32b gelegt und die zweite Klemmhülse 34 wird gegen die zweite Kausche 32b geschoben. Das so vorbereitete Hängerseil 22 wir hierzu vorzugsweise in das Ziehstück 52 eingelegt, (wobei zuvor die zweite Kausche 32b von dem zweiten Hilfs-Fixierelement 48b entnommen wurde). Durch Ziehen am Seil wird die Klemmhülse 34 so nahe wie möglich an die zweite Kausche 32b herangeschoben. Mit der anderen Seite wird analog verfahren, d.h. die erste Kausche 32a wird ggf. noch eingelegt und das Hängerseil 22 wird mit einem anderen Teilabschnitt in das Ziehstück 54 eingelegt und durch Ziehen am Hängerseil 22 wird die weitere Klemmhülse 34 in Richtung zur ersten Kausche 32a verschoben.

Das mit der Montagevorrichtung 2 durchzuführende Verfahren zur Vormontage des Hängers 8 zeichnet sich dadurch aus, dass die erforderlichen Bauteile, nämlichen Kauschen 32a, 32b, Klemmhülsen 34 sowie Kabelschuhe 38 zunächst an dem abgelängten Hängerseil 22 angebracht werden. D.h. das Hängerseil wird durch die Klemmhülsen 34 sowie durch die Hülsen der Kabelschuhe 38 hindurchgefädelt und um die Kauschen 32a, 32b geführt. Das so vorbereitete Hängerseil 22 wird in die Montageeinheiten 6a, 6b eingelegt, wobei hierzu die Kauschen 32a, 32b und die Kabelschuhe 38 an den Fixierelementen 44a bis 44d fixiert werden.

Die Einstellung der definierten, für jeden Hänger 8 individuellen Hängerlänge L erfolgt durch eine Verschiebung des Schlitten 6a gegenüber der festen Montageeinheit 6b. Nachdem der definierte Abstand eingenommen ist, wird durch die Klemmeinheiten 42a bis 42d das Hängerseil 22 klemmend fixiert. Über diese Vorfixierung ist daher das gewünschte Abstandsmaß eingestellt. Anschließend erfolgt das insbesondere gleichzeitige Verpressen der beiden Klemmhülsen 34. Bevorzugt werden dabei auch gleichzeitig die Kabelschuhe 38 verpresst. Anschließend werden die Klemmeinheiten 42a bis 42d wieder gelöst und der vorgefertigte Hänger 8 kann entnommen werden. Bei der Montage werden dabei insbesondere folgende Schritte nacheinander ausgeführt:
1. Erfassen der gewünschten Länge des Hängerseils 22 und Eingabe derselben in die Steuereinheit 26, entweder manuell durch den Bediener oder automatisch über eine Kommunikationsverbindung einer Messeinrichtung zum Messen des Abstands zwischen Fahrdraht und Tragseil.
2. Das Hängerseil 22 wird in der gewünschten Länge ausgestoßen und durch die Schneideinrichtung abgetrennt. Dies erfolgt vorzugsweise automatisch nach einem ersten Startsignal, welches beispielsweise manuell durch den Benutzer angegeben wird.
3. Der Schlitten 6a verfährt nach Eingabe eines zweiten Startsignals insbesondere automatisch auf eine definierte Position, die mit der Hängerlänge L korreliert ist. Das Verfahren des Schlittens 6a kann bereits auch nach Eingabe der Hängerlänge L erfolgen. Aufgrund der Arbeitsschutzmaßnahmen geschieht das Verfahren vorzugsweise lediglich bei geschlossener Schutzhaube 16.
   Neben einem automatischen Verfahren des Schlittens 6a an die definierte Position besteht auch die Möglichkeit, diesen manuell zu verfahren. Hierzu ist beispielsweise ein entsprechender Maßstab an der Montagevorrichtung 2 angegeben. Der Abstand wird ggf. auch über eine Anzeige dargestellt.
4. Auffädeln und Vorpositionieren der Presshülsen (Klemmhülsen sowie Kabelschuhe) sowie der Kauschen 32a, 32b, manuell durch den Benutzer oder auch maschinell (grobes Vorpositionieren); Das Auffädeln und Vorpositionieren erfolgt wahlweise händisch oder mit Hilfe der Fixierelemente 44a - 44d. In bevorzugter Weise erfolgt das Auffädeln zumindest der Klemmhülsen mit Hilfe der Konfektionierungshilfe.
5. Nach einem ggf. erforderlichen Öffnen der Schutzhaube 16 wird der vorbereitete Hänger 8 eingelegt, d.h. die Kauschen 32a, 32b und die Kabelschuhe 38 werden an den Fixierbolzen 44a bis 44d eingehängt. Das Hängerseil 22 wird ggf., falls erforderlich, nachgeführt und zwar derart, dass es möglichst straff zwischen den beiden Kauschen 32a, 32b gespannt ist.
   Falls das Auffädeln mit Hilfe der Konfektionierungshilfe erfolgte, wird der vorbereitete Hänger 8 zuvor von den Hilfs-Fixierelmenten 48a, 48b abgenommen und an den eigentlichen Fixierelementen 44a-44d fixiert.
6. Ggf. Fixieren des Hängerseils 22 durch die (manuellen) Klemmeinheiten 42a bis 42d und sofern erforderlich Schließen der Schutzhaube 16;
7. Starten des Pressvorgangs durch Eingabe eines dritten Startsignals, wodurch also die einzelnen Presseinheiten 42a bis 42d hydraulisch zum Ausüben des Pressvorgangs angesteuert werden.
8. Nach einem ggf. erforderlichen Öffnen der Schutzhaube 16 wird der fertige Hänger 8 entnommen und die Schutzhaube 16 vorzugsweise wieder geschlossen.
9. Wiederholung der Schritte 3 bis 8 für weitere Hänger.

Die Schritte 1, 2 für einen nachfolgenden Hänger 8 können bereits durchgeführt werden, während die Schritte 3 bis 8 des vorausgehenden Hängers durchgeführt werden.

Die Erfassung und Eingabe der Hängerlänge L erfolgt dabei beispielsweise vollautomatisch, ebenso wie das Aufstoßen und Ablängen des Hängerseils 22 auf eine dann erforderliche Seillänge. Hierzu ist beispielsweise eine automatische, vorzugsweise optische Abstandsmesseinrichtung vorgesehen ist, die den Abstand zwischen Fahrdraht und Tragseil misst und an die Steuereinheit 26, beispielsweise über eine drahtlose Kommunikationsverbindung weitergibt. Diese ermittelt dann die erforderliche Länge des Hängerseils 22. Die Messeinrichtung kann jedoch auch halbautomatisch ausgebildet sein, beispielsweise durch eine optische, von Hand betätigbare (Laser-)Messeinheit, die dann wiederum den erfassten Abstand automatisch über eine Kommunikationsverbindung der Steuereinheit 26 übermittelt.

Weiterhin weist die Montagevorrichtung 2 vorzugsweise noch eine Markierungseinheit auf (nicht dargestellt), mit deren Hilfe jeder Hänger 8 individuell markiert wird. Weiterhin wird vorzugsweise für jeden Hänger der Vormontage-Vorgang protokolliert. In dem Protokoll und/oder auf der Markierung wird dann insbesondere der Wert der Hängerlänge L beispielsweise mit zusätzlichen Informationen wie Montagedatum, und/oder Mitarbeiterkennung etc. aufgebracht. Bei der Markierungseinrichtung handelt es sich insbesondere um eine Einprägung, beispielsweise durch eine Nadelprägung.

Die hier beschriebene Montagevorrichtung 2 ermöglicht eine einfache, in einigen Schritten automatisierte Vormontage des Hängers 8 durch einen Bediener. Die eingegebene Hängerlänge L wird automatisch in eine entsprechende Seillänge umgerechnet und das Seil wird mittels einer Ausschubeinrichtung (beispielsweise Elektromotor mit Gummirolle oder ähnliches) von der Seiltrommel 20 abgewickelt und ausgestoßen. Insbesondere durch eine Zweihandsteuerung erfolgt dann die automatische Abtrennung an einer gewünschten Stelle, insbesondere ohne dass der Bediener sich um die Länge kümmern muss. Vorzugsweise erfolgt das Ablängen durch einen hydraulisch angesteuerten Schneidkopf. Der Benutzer bereitet den Hänger 8 manuell vor und legt ihn in die Vorrichtung 2 ein, bevor er dann wieder - vorzugsweise mittels einer Zweithandbedienung - den Pressvorgang startet, bei dem alle vier Presseinheiten 40a bis 40d zeitgleich den Pressvorgang ausführen.

### Bezugszeichenliste

- 2: Montagevorrichtung
- 4: Traggerüst
- 6a: Montageeinheit / Schlitten
- 6b: Montageeinheit
- 8: Hänger
- 10: Längsrichtung
- 12: Führungsschiene
- 14: Spindelantrieb
- 16: Schutzhaube
- 18: Hydraulikaggregat
- 20: Seiltrommel
- 22: Hängerseil
- 24: Schneideinrichtung
- 26: Steuereinheit
- 28: Bedieneinheit
- 30: Vorratsbehälter
- 32a: erste Kausche
- 32b: zweite Kausche
- 34: Klemmhülse
- 36: Stromschlaufe
- 38: Kabelschuh
- 40a bis 40d: erste bis vierte Presseinheit
- 42a bis 42d: erste bis vierte Klemmeinheit
- 44a bis 44d: erstes bis viertes Fixierelement
- 46: Hydraulikanschluss
- 48a, b: Hilfs-Fixierelement
- 50: Klemmhebel
- 52: Anschlag
- 54: Ziehstück
- L: Hängerlänge

## Patentansprüche

1. Montagevorrichtung (2) zur Vormontage von Hängern (8) für eine elektrische Oberleitung, wobei die Hänger (8) zur Befestigung zwischen einem Fahrdraht und einem Tragseil der Oberleitung ausgebildet und ein jeweiliger Hänger ein Hängerseil (22) sowie eine erste Kausche (32a) und eine zweite Kausche (32b) aufweist, die unter einem definierten Abstand zueinander am Hängerseil mit Hilfe jeweils einer Klemmhülse (34) am Hängerseil (22) fixiert sind, wobei die Montagevorrichtung (2) aufweist
- ein erstes Fixierelement (44a) zur Fixierung der ersten Kausche (32a),
- eine erste Presseinheit (40a) zur Ausbildung einer Klemmverbindung zwischen dem Hängerseil und der Klemmhülse im Bereich der ersten Kausche (32a),
- vorzugsweise eine erste Klemmeinheit (42a) zum Festklemmen des auf eine gewünschte Länge abgelängten Hängerseils im Bereich des ersten Fixierelements (44a),
- ein zweites Fixierelement (44b) zur Fixierung der zweiten Kausche (32b),
- eine zweite Presseinheit (40b) zur Ausbildung einer Klemmverbindung zwischen dem Hängerseil (22) und der Klemmhülse (34) im Bereich der zweiten Kausche (32b),
- vorzugsweise eine zweite Klemmeinheit (42b) zum Festklemmen des auf die gewünschte Länge abgelängten Hängerseils (22) im Bereich des zweiten Fixierelements (44b), wobei
- das zweite Fixierelement (44b) und die zweite Presseinheit (40b) gemeinsam auf einen verfahrbaren Schlitten (6a) angeordnet sind, der relativ zum ersten Fixierelement (44a) zur Einstellung des definierten Abstands zwischen den beiden Fixierelementen (44a, b) verfahrbar ist, so dass ein auf die gewünschte Länge abgelängtes und mit den Klemmhülsen (34) und den Kauschen (32a, b) versehenes Hängerseil (22) vorder Ausbildung der Klemmverbindung an den Fixierelementen (40a, b) eingehängt werden kann.

2. Montagevorrichtung (2) nach dem vorhergehenden Anspruch, die zur Herstellung eines stromfesten Hängers (8) ausgebildet ist, bei dem Endbereiche des Hängerseils (22) jeweils als Stromschlaufen (36) über die jeweilige Kausche (32a, b) hinaus geführt sind und endseitig an jeder Stromschlaufe (36) jeweils ein Kabelschuh (38) am Hängerseil (22) angeklemmt ist, wobei die Montagevorrichtung (2) weiterhin weitere Fixierelemente (44c, d) zur Fixierung der Kabelschuhe (38) sowie eine dritte und eine vierte Presseinheit (40c, d) zur Ausbildung einer Klemmverbindung zwischen dem Hängerseil (22) und dem jeweiligen Kabelschuh (38) aufweist, wobei die dritte und vierte Presseinheit (40c, d) jeweils im Bereich der ersten bzw. zweiten Presseinheit (40a, b) angeordnet sind und die vierte Presseinheit (40d) gemeinsam mit der zweiten Presseinheit (40b) auf dem Schlitten (6a) angeordnet ist.

3. Montagevorrichtung (2) nach einem der vorhergehenden Ansprüche, bei der die dritte und die vierte Presseinheit (40c, d) jeweils winklig, insbesondere rechtwinklig zu der jeweils zugeordneten ersten bzw. zweiten Presseinheit (40a, b) orientiert ist.

4. Montagevorrichtung (2) nach einem der Ansprüche 2 bis 3, bei der auch der dritten und vierten Presseinheit (40c, d) jeweils eine Klemmeinheit zum Festklemmen des Hängerseils (22) im Bereich des dritten bzw. vierten Fixierelements (44c, d) angeordnet ist.

5. Montagevorrichtung (2) nach einem der vorhergehenden Ansprüche, die eine Steuereinheit (26) aufweist, über die die Vormontage des Hängers (8) zumindest teilautomatisiert erfolgt.

6. Montagevorrichtung (2) nach einem der vorhergehenden Ansprüche, bei der der Schlitten (6a) mit Hilfe eines motorischen Antriebs (14) gesteuert in Abhängigkeit einer Eingabe des definierten Abstands insbesondere automatisch an eine definierte Position verfahrbar ist.

7. Montagevorrichtung (2) nach einem der Ansprüche 5 oder 6, bei der die Steuereinheit (26) zum Ansteuern der Presseinheiten (40a - d) ausgebildet ist, derart dass die Presseinheiten (40a - d) gleichzeitig die Klemmverbindungen ausbilden.

8. Montagevorrichtung (2) nach einem der vorhergehenden Ansprüche, die weiterhin zumindest eines und vorzugsweise alle der folgenden Merkmale aufweist:
- eine Seiltrommel (20), von der das Hängerseil (22) abrollbar ist,
- eine Schneideinrichtung (24) zum Ablängen des Hängerseils (22) auf eine erforderliche Länge, wobei das Ablängen insbesondere automatisch in Abhängigkeit der Eingabe des definierten Abstands erfolgt,
- ein Ablagefach für das auf die gewünschte Länge abgelängte Hängerseil (22),
- eine optionale Markierungseinheit zum insbesondere automatischen Beschriften eines jeweiligen Hängers (8),
- ein Hydraulikaggregat zur Erzeugung eines für die Presseinheiten erforderlichen Hydraulikdrucks.

9. Montagevorrichtung (2) nach einem der vorhergehenden Ansprüche, die einen Montagetisch aufweist, auf der die Presseinheiten (40a - d) sowie der verfahrbare Schlitten (6a) angeordnet ist.

10. Montagevorrichtung (2) nach einem der vorhergehenden Ansprüche und nach Anspruch 5, bei der die Steuereinheit (26) in Kommunikationsverbindung mit einer Messeinrichtung steht, über die ein Abstand zwischen dem Tragseil und dem Fahrdraht ausmessbar ist und die den gemessenen Abstand als definierten Abstand an die Steuereinheit (26) übergibt, wobei die Messeinrichtung insbesondere zur automatischen Erfassung des Abstands ausgebildet ist.

11. Montagevorrichtung (2) nach einem der vorhergehenden Ansprüche, die auf einem Hubwagen angeordnet ist und / oder bei der es sich um eine mobile Vorrichtung handelt, die ein Gewicht von vorzugsweise maximal 200kg oder maximal 300kg aufweist.

12. Montagevorrichtung (2) nach einem der vorhergehenden Ansprüche, bei der das erste Fixierelement (44a) und die erste Presseinheit (40a) auf einer Montageeinheit (6b) angeordnet sind und wobei zusätzlich auf dem Schlitten (6a) sowie auf der Montageeinheit (6b) ein erstes sowie ein zweites Hilfs-Fixierelement (48a,b) als Konfektionierungshilfen angeordnet sind, die neben der jeweiligen Presseinheit (40a,b) in einem frei zugänglichen Bereich angeordnet sind und die zueinander vorzugsweise den gleichen Abstand wie die Fixierelemente (44a,44b) aufweisen.

13. Verfahren zur insbesondere zumindest teilautomatisierten Vormontage eines Hängers (8) für eine elektrische Oberleitung mit Hilfe einer Montagevorrichtung (2) nach einem der vorhergehenden Ansprüche, wobei der Hänger (8) zur Befestigung zwischen einem Fahrdraht und einem Tragseil der Oberleitung ausgebildet ist und der Hänger (8) im vormontierten Zustand ein Hängerseil (22) sowie eine erste Kausche (32a) und eine zweite Kausche (32b) aufweist, die unter einem definierten Abstand zueinander am Hängerseil (22) mit Hilfe jeweils einer Klemmhülse (34) am Hängerseil (22) fixiert sind, wobei zur Vormontage des Hängers (8)
- das Hängerseil (22) jeweils um die Kauschen (32a, b) geführt wird,
- die Kauschen (32a, b) an Fixierelementen (44a, b) fixiert werden,
- die beiden Fixierelemente (44a, b) vor oder nach der Fixierung der Kauschen(32a, b) relativ zueinander zur Einstellung des definierten Abstands verfahren werden,
- im Bereich der Kauschen (32a, b) das Hängerseil (22) bei Bedarf jeweils durch Klemmeinheiten (42a, b) festgeklemmt werden,
- die beiden Klemmhülsen (34) anschließend jeweils am Hängerseil (22) und vorzugsweise gleichzeitig festgeklemmt werden.

14. Verfahren nach dem vorhergehenden Anspruch, bei dem in Abhängigkeit einer Vorgabe für den definierten Abstand der Schlitten (6a) automatische verfährt und das Klemmen der Klemmhülsen (34) am Hängerseil (22) ebenfalls automatisch erfolgt.

15. Verfahren nach einem der beiden vorhergehenden Ansprüchen, bei dem der definierte Abstand insbesondere automatisch mit Hilfe einer Messeinrichtung gemessen und über eine Kommunikationsverbindung an eine Steuereinheit (26) übermittelt wird, die dann in Abhängigkeit des Messwertes für den definierten Abstand den Schlitten (6a) automatisch verfährt.
